# EUROPEAN PATENT SPECIFICATION

(11) **EP 3 323 947 B1**
(45) Date of publication and mention of the grant of the patent: **29.04.2020**
(21) Application number: 17163863.8
(22) Date of filing: 30.03.2017
(51) Int. Cl.: F16K 27/02, E03C 1/04

(54) **SINGLE-LEVER MIXER TAP**
EINHEBEL-REGLER-HAHN
ROBINET MONO-BRAS-CONTRÔLEUR

(30) Priority: 21.11.2016 ES 201631383
(43) Date of publication of application: 23.05.2018
(73) Proprietor: Caspro, S.A., 08759 Vallirana - Barcelona (ES)
(72) Inventor: TRES CASAS, Daniel, 08759 VALLIRANA (Barcelona) (ES)
(74) Representative: Ungria López, Javier

(56) References cited:
- WO-A1-2007/080237
- CN-U- 202 381 763
- DE-A1- 19 640 509
- DE-U1-202014 101 920
- FR-A1- 2 927 141
- US-B1- 9 464 416

## Description

### OBJECT OF THE INVENTION

The present invention, as expressed in the title of this description, refers to a single-lever mixer tap. The tap includes a housing comprising a one-piece that is built in a wall; showing only a decorative fleuron, an actuator controller and a selector controller. The actuation controller is connected to a mixing cartridge that mixes hot liquids, such as water, and cold liquids, such as water as well. By contrast, the selector controller is connected to a selector cartridge to selectively redirect the flow of water to one of the several outlets. The tap of the present invention can also be used to mix and distribute two different liquids of equal or different temperatures.

### TECHNICAL PROBLEM TO ADDRESS AND BACKGROUND OF THE

### INVENTION

In the current state of the art there are complex taps built in walls to supply water to showers and baths, where some of said taps feature thermostatic systems that significantly increase their cost, and which also require complex installations procedures.

Their structure and installation becomes even more complex if the taps also need to supply domestic hot water to at least three different outlets (shower, hand-held shower head and cascade shower).

In light of the technical problems that self-regulating thermostatic systems usually have, the current trend is to use single-lever mixer taps with a mixing cartridge connected to an outlet selector. In spite of this, the morphology of the tap needs to have a certain complex structure, which increases its cost. It is therefore of interest to design a simple and practical tap that can mix water correctly, distribute the flow of water at will between at least three outlets, and that it keeps providing the user with a tap that is cold to the touch. DE 20 2014 101 920 U1, DE 196 40 509 A1 and CN 202381763 U disclose single lever mixer taps forming part of the relevant state of the art.

### DESCRIPTION OF THE INVENTION

In order to meet the objectives and avoid the drawbacks mentioned in the previous sections, the invention proposes a single-lever mixer tap which comprises:
At least one housing with a first inlet of hot liquid, a second inlet of cold liquid, and several outlets of liquid.

A mixing cartridge in order to mix the cold and hot liquids; where said mixing cartridge sits on a bottom with a water passage that lets hot water pass to the mixing cartridge and a water passage that lets cold water pass to the mixing cartridge.

A selector cartridge to select one of the outlets.

The housing comprises a one-piece body including at least a first head for mixing liquids, where said first head is coupled to the mixing cartridge; and where said first head comprises a first chamber where the first inlet leads into, a second chamber where the second inlet leads into, and a third chamber connected to a common outlet for the liquid in the mixing cartridge;

The third chamber of the first head is connected to an intermediate chamber of the housing.

The housing also comprises a second selector head to send the flow of water towards one of the outlets; where said second selector head is coupled to the selector cartridge; and where the intermediate chamber is connected to a space enclosing the selector cartridge coupled to the second head.

The selector cartridge sits on a bottom comprising several holes that are connected independently with the outlets in order to select the outlet of the flow of liquid when the tap is open.

The first head of the housing comprises a first box that comprises the bottom and a first annular part that has an inner surface where a guide screw is fixed, which encases the mixing cartridge held axially by means of a first fixing screw.

The second head of the housing comprises a second box that comprises the bottom and a second annular part that has an inner surface where a second fixing screw is fixed, which axially holds the selector cartridge.

The tap of the present invention comprises a casing comprising a bottom and an encasing lateral wall; where said bottom comprises a first opening and a second opening on which a series of outer encasing surfaces of the first and second annular parts of the first and second boxes are secured.

The tap also includes a decorative fleuron that has a first hole that is coaxial with the mixing cartridge, and a second hole that is coaxial with the selector cartridge. A front gusset plate is fixed on an inner face of the decorative fleuron, which has a recess where a protruding part of an axial guide connected to the inner side of the lateral wall of the casing is fitted; where part of the guide screw is placed inside the first hole of the decorative fleuron.

The part of the guide screw placed inside the first hole is tightened inside a joint that is housed in turn inside an annular slot located in correspondence with an annular surface that marks the limits of said first hole of the decorative fleuron.

In addition, a tubular body is placed inside the second hole of the decorative fleuron, which forms part of a selector controller connected to the selector cartridge in order to be able to select one of the several outlets.

The tap of the present invention also comprises an adaptor that is connected to a central axis of the selector cartridge; where one end of the adaptor is fitted inside the tubular body of the selector controller.

In one of the embodiments of the invention the outlets are placed at 90° degrees of relative angular difference between them.

The selector cartridge has an encasing lateral wall with arched windows that allow the passage of liquid by means of flooding from the intermediate chamber to the inside of said selector cartridge; which happens when the tap is in the open position.

The outlets have closed bottoms comprising partition walls located in a central area behind the bottom of the second head of the housing; where the selector cartridge sits on said bottom.

The housing comprises anchoring components, which are equidistant from a central point of said housing; where in one embodiment said anchoring components are located on lugs connected to the housing; and where in one embodiment the anchoring components comprise through slots.

Hereinafter, in order to give a better understanding of the description, the object of the invention has been detailed in a series of drawings that are an integral part of the report and are for illustration purposes and without limitation.

### BRIEF DESCRIPTION OF THE FIGURES

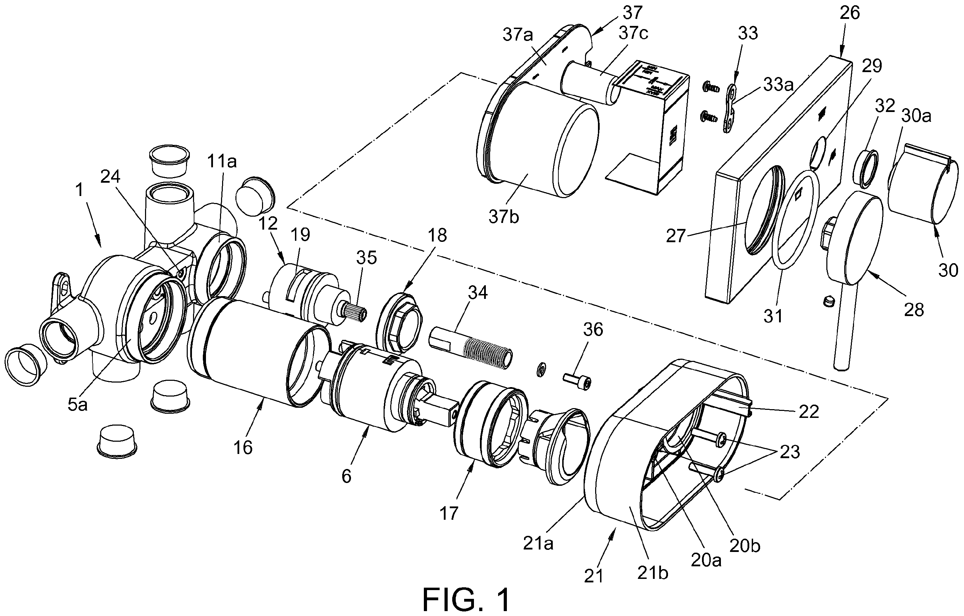

Figure 1- Shows an exploded perspective view of the single-lever mixer tap that is the object of the invention.

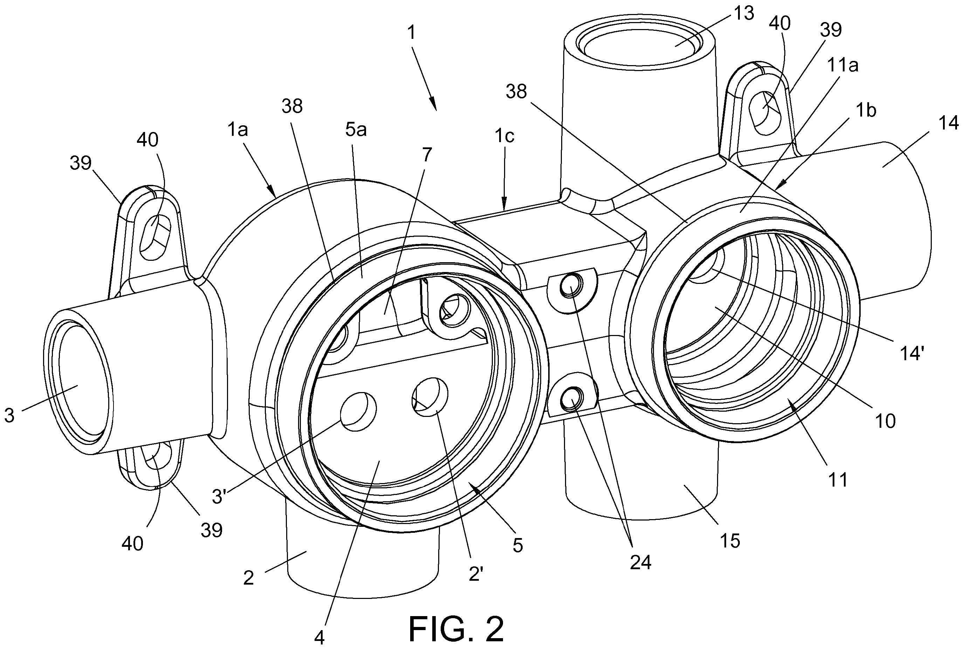

Figure 2.- Shows a perspective view of a housing that forms part of the tap that is the object of the invention.

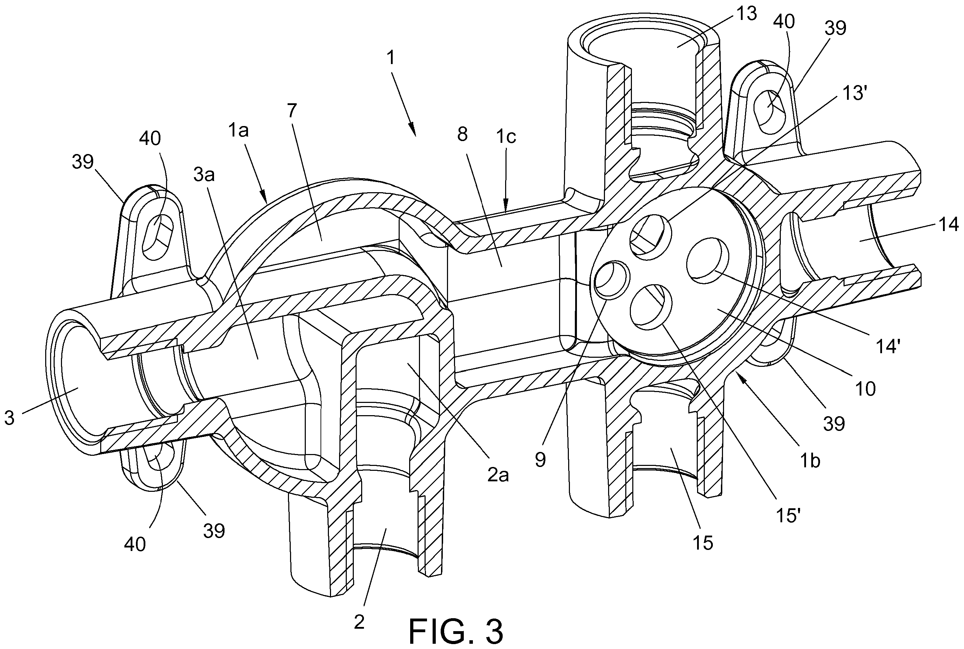

Figure 3.- Shows a cross-sectional view of the housing of the single-lever mixer tap.

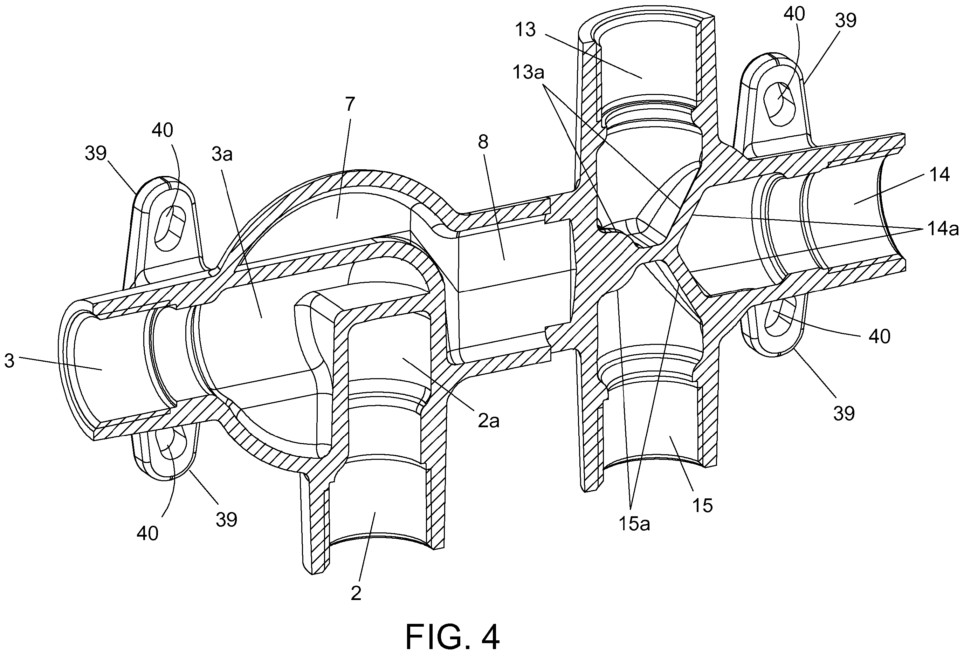

Figure 4.- Shows another cross-sectional view of the housing of the single-lever mixer tap.

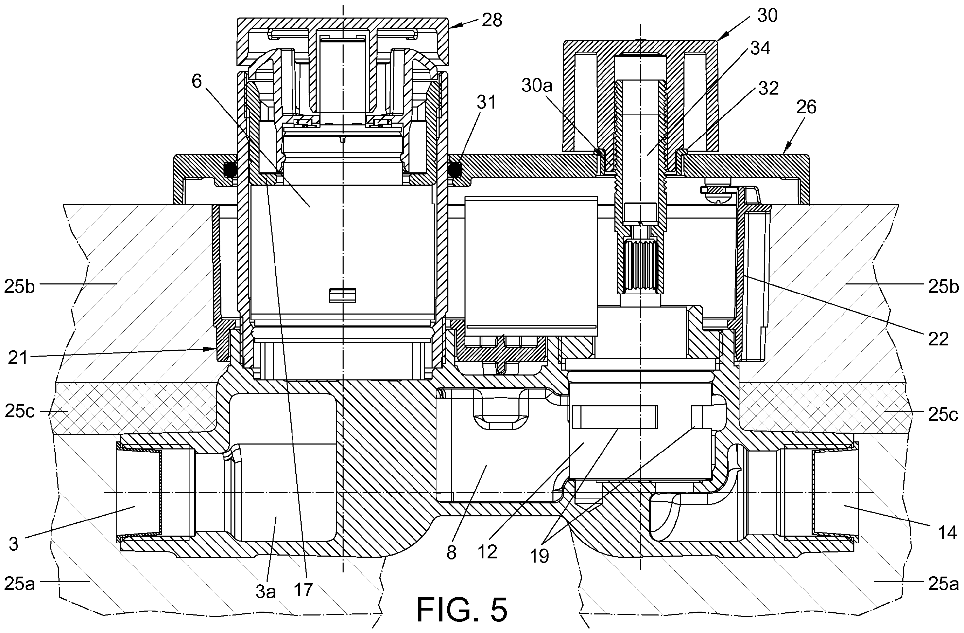

Figure 5.- Shows a cross-sectional view of the tap that is the object of the invention.

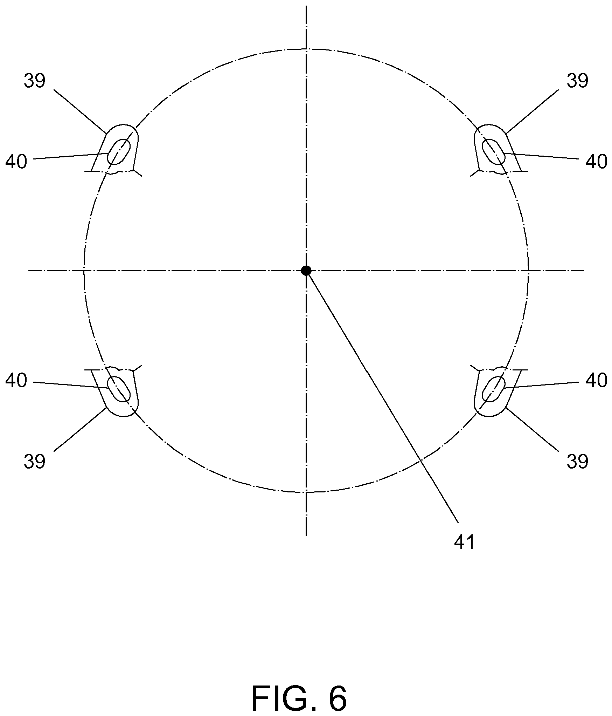

Figure 6.- Shows a schematic view, wherein the equal distance between anchoring components of a housing of the tap is shown in relation to a central point of said housing.

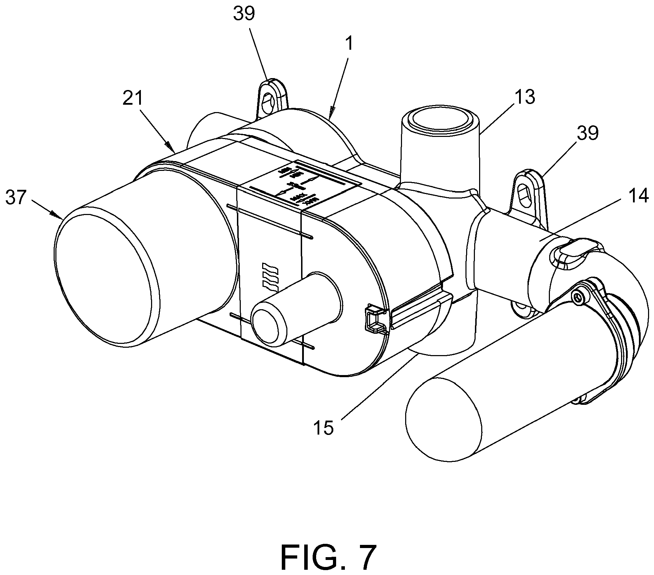

Figure 7.- Shows a perspective view of the tap, highlighting an outer elbow connected to one of the several outlets of the tap; and wherein said elbow is protected by means of a provisional plug.

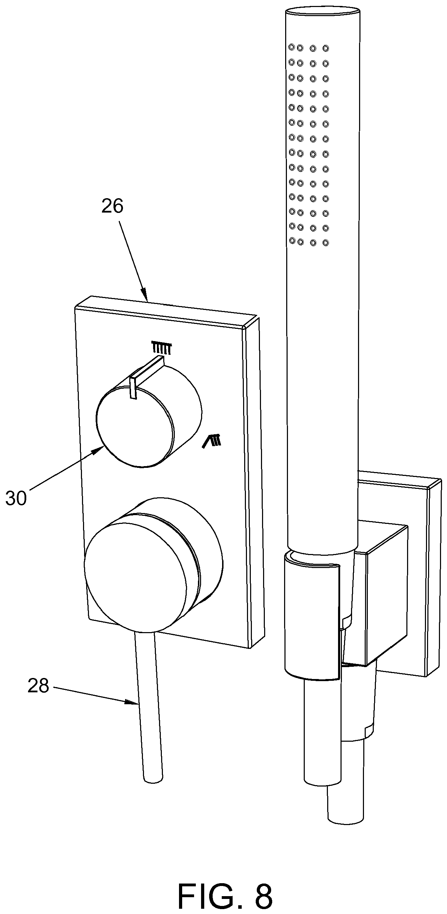

Figure 8.- Shows a perspective view of the tap assembled in a vertical position, wherein a shower head is highlighted, which is arranged in a vertical position and held in place by a fixed support.

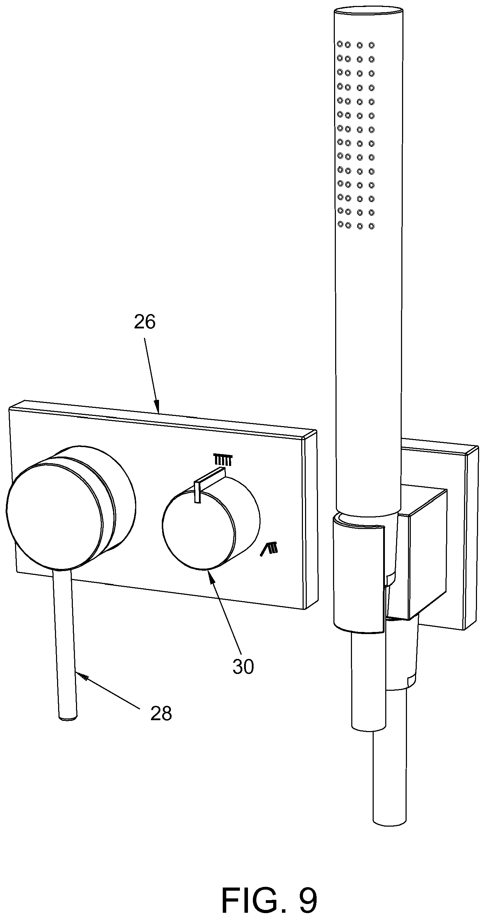

Figure 9.- Shows a view similar to the previous ones, where the tap is assembled in a horizontal position.

### DESCRIPTION OF A SAMPLE EMBODIMENT

Taking into consideration the numbering adopted in the drawings, the single-lever mixer tap comprises a housing 1 that includes a first mixing head 1a in order to mix hot and cold water, a second selector head 1b for the water outlet, and a central part 1c that connects the first head 1a and the second head 1b.

The first head 1a of the housing 1 includes a first hot water inlet 2 that leads into a first chamber 2a of the first head 1a and a second cold water inlet 3 that leads into a second chamber 3a of the second head 1b; where said chambers 2a and 3a are connected with their respective holes 2', 3' located on a bottom 4 of a first box 5 of the first head 1a of the housing 1.

The first box 5 is coupled to a conventional mixing cartridge 6 for hot and cold water that has a common outlet for liquids that connects with a first chamber 7 of the first head 1a, which in turn connects with an intermediate chamber 8 located in the central part 1c of the housing 1, connecting said intermediate chamber 8 with a space encasing a conventional selector cartridge 12.

The mixing cartridge 6 sits on the bottom 4 of the first box 5 and the selector cartridge 12 sits on a bottom 10 of a second box 11 located in the second head 1b. Said bottom 10 of the second box 11 includes a blind bore 9 where a lug of the selector cartridge 12 is fitted in order to position it correctly.

Therefore, the selector cartridge 12 is coupled to the second box 11, which selectively distributes the flow of water towards one of the several outlets: first 13, second 14 and third 15, in order to let the flow of water exit through a shower, a hand-held flexible shower head or an outlet as a jet of water that falls into a bathroom element such as a bath.

In order to do so, the bottom 10 of the second box 11 also includes a first hole 13' that connects with the first outlet 13, a second hole 14' that connects with the second outlet 14, a third hole 15' that connects with the third outlet 15, so that the selector cartridge 12 selects the passage of water from the intermediate chamber 8 towards one of the three holes 13', 14', 15', which lead into the outlets 13, 14, 15; with the water first passing by means of flooding through a space encasing the selector cartridge 12 coupled to the second head 1b.

The outlets 13, 14, 15 have closed bottoms 13a, 14a, 15a comprising partition walls located in a central area behind the bottom 10 of the second head 1b of the housing 1; where the selector cartridge 12 sits on said bottom 10.

In one embodiment shown in the drawings, the outlets 13, 14, 15 are placed at 90° degrees of relative angular difference between them, though the angular difference could be different. This angular difference prevents the outlets 13, 14, 15 from crossing each other when the tap of the present invention is installed.

The location of the first hot water duct 2 and its small size relative to the assembly of the housing 1 of the tap results in a housing 1 that is cold to the touch, preventing users from getting scalded when they use the tap.

The first box 5 of the first head 1a includes a first annular part 5a that has an inner surface on which a tubular-shaped guide screw 16 is fixed, which acts as a guiding component of the mixing cartridge 6 held axially by means of a fixing screw 17 that screws in the guide screw 16.

The second box 11 of the second head 1b includes a second annular part 11a that has an inner surface on which a second fixing screw 18 which holds the selector cartridge 12 axially is fixed, which has an encasing lateral wall with arched windows 19 that allow the passage of liquid by means of flooding from the intermediate chamber 8 to the inside of said selector cartridge 12, in order to then direct the flow of water to one of the outlets 13, 14, 15 of the housing 1.

The first and second annular parts 5a and 11a of the first and second boxes 5 and 11 comprise outer surfaces on which the edges of a first circular opening 20a and a second circular opening 20b are secured, which are located on a bottom 21a of a casing 21.

Said casing 21 also includes a lateral wall 21b that has an axial guide 22, so that parts of the mixing cartridge 6, the guide screw 16 and part of the selector cartridge 12 are housed inside the casing 21.

The casing 21 is fixed to the housing 1 by means of screws 23 coupled to a series of threaded bores 24 of said housing 1, so that the bottom 21a of the casing 21 sits on staggered stops 38 of the two heads 1a, 1b of the housing 1.

Once the tap has been installed, the housing 1 thereof is hidden in one of the walls 25a of the installation, so that an edge of the lateral wall 21b of the casing 21 is flush against an outer surface of a tiled wall covering 25b (or another type of wall covering) joined to the wall 25a where it has been installed by means of a plasterboard adhesive 25c, with an end part of the axial guide 22 protruding from the outer surface of the tiled wall covering 25b.

The tap of the present invention also comprises a decorative fleuron 26 that has a first hole 27 and a second hole 29. An actuation controller 28 is connected to the mixing cartridge 6 and a selector controller 30 is connected to a selector cartridge 12.

The actuation controller 28 and the selector controller 30, together with the decorative fleuron 26, are located outside the outer surface of the tiled wall covering 25b.

Part of the guide screw 16 is secured in the first hole 27 of the decorative fleuron 26 interposed with a joint 31 fitted in an annular slot of the decorative fleuron 26, while an end part of a tubular body 30a of the selector controller 30 is located inside the second hole 29 of the decorative fleuron 26 interposed with a bushing 32.

A front gusset plate 33 is fixed on an inner face of the decorative fleuron 26, which has a recess 33a where a protruding part of an axial guide 22 of the casing 21 is fitted, so that the decorative fleuron 26 is placed and secured in a stable position by means of the joint 32 that hugs part of the guide screw 16 and by means of the recess 33a of the front gusset plate 33 that fits in the protruding part of the axial guide 22 of the casing 21.

Due to the recess 33a of the front gusset plate 33 and the joint 31 located in correspondence with the second hole 29 of the decorative fleuron 26, said decorative fleuron 26 is positioned correctly and with total stability, avoiding looseness and undesired movements.

The tap of the invention includes a tubular-shaped adaptor 34, which is fixed to a central axis 35 of the selector cartridge 12 by means of a screw 36, so that an end part of said adaptor 34, which protrudes from the decorative fleuron 26, is fitted inside a hole of the selector controller 30.

The adaptor 34 is cut to the desired length depending on how deep the housing 1 of the tap has been built in the wall 25a of the installation. The adaptor 34 has a base at the end thereof that comprises a central perforation where the screw 36 that fixes the adaptor 34 to the central axis 35 of the selector cartridge 12 is introduced.

In addition, there could also be a lid 37 used in principle to protect the tap when it is being assembled. Said lid comprises a base 37a, a first hollow body 37b facing the mixing cartridge 6 and a second hollow body 37c facing the selector cartridge 12, so that the base 37a is fitted inside the space defined by the lateral wall 21b of the casing 21.

The passage of hot water inside the tap is very small, which helps prevent the housing 1 and the other components related to the housing 1 from overheating.

The housing 1 comprises anchoring components, which are equidistant from a central point 41 of said housing 1; where in one embodiment said anchoring components are located on lugs 39 connected to the housing 1; and where in one embodiment the anchoring components comprise through slots 40. The described equal distance makes it easier to assemble the housing 1 of the assembly of the tap.

In order to do so, the assembly of the housing 1 and the casing 21 mounted on the housing 1 can be used so that in this situation a level ruler is placed horizontally on said casing 21 in order to ensure it is placed horizontally; with the through slots 40 and the equal distance thereof from the central point 41 providing it some margin so that the builder can assemble it with more freedom and precision.

## Claims

1. A single-lever mixer tap, which comprises:
- at least one housing (1) with a first inlet (2) of hot liquid, a second inlet (3) of cold liquid, and several outlets (13, 14, 15) of liquid;
- a mixing cartridge (6) in order to mix the cold and hot liquids; where said mixing cartridge (6) sits on a bottom (4) with a water passage (2') that lets hot water pass to the mixing cartridge (6) and a water passage (3') that lets cold water pass to the mixing cartridge (6);
- a selector cartridge (12) to select one of the outlets (13, 14, 15);
- the at least one housing (1) comprises a one-piece body including at least a first head (1a) for mixing liquids, where said first head (1a) is coupled to the mixing cartridge (6); and where said first head (1a) comprises a first chamber (2a) where the first inlet (2) leads into, a second chamber (3a) where the second inlet (3) leads into, and a third chamber (7) connected to a common outlet for the liquid in the mixing cartridge (6);
- the third chamber (7) of the first head (1a) is connected to an intermediate chamber (8) of the housing (1);
- the housing (1) also comprises a second selector head (1b) to send the flow of water towards one of the outlets (13, 14, 15); where said second selector head (1b) is connected to the selector cartridge (12); and where the intermediate chamber (8) is connected to a space enclosing the selector cartridge (12) coupled to the second head (1b);
- the selector cartridge (12) sits on a bottom (10) that includes several holes (13', 14', 15') that are connected independently with the outlets (13, 14, 15); wherein
- the first head (1a) of the housing (1) comprises a first box (5) that comprises the bottom (4) and a first annular part (5a) that has an inner surface on which a tubular-shaped guide screw (16) is fixed, which acts as a guiding component of the mixing cartridge (6) held axially by means of a first fixing screw (17) that screws in the guide screw (16);
- the second head (1b) of the housing (1) comprises a second box (11) that comprises the bottom (10) and a second annular part (11a) that has an inner surface where a second fixing screw (18) is fixed, which axially holds the selector cartridge (12);
the single-lever mixer tap further comprises a casing (21) formed by a bottom (21a) and an encasing lateral wall (21b); where said bottom (21) comprises a first opening (20a) and a second opening (20b) on which a series of outer encasing surfaces of the first and second annular parts (5a, 11a) of the first and second boxes (5, 11) are secured.

2. A single-lever mixer tap, according to claim 1, **characterized in that**:
- it includes a decorative fleuron (26) that has a first hole (27) that is coaxial with the mixing cartridge (6), and a second hole (29) that is coaxial with the selector cartridge (12);
- a front gusset plate (33) is fixed on an inner face of the decorative fleuron (26); said front gusset plate having a recess (33a) where a protruding part of an axial guide (22) connected to an inner side of the lateral wall (21b) of the casing (21) is fitted; where a part of the guide screw (16) is placed inside the first hole (27) of the decorative fleuron (26).

3. A single-lever mixer tap, according to claim 2, **characterized in that** the part of the guide screw (16) placed inside the first hole (27) is tightened inside a joint (31) that is housed in turn inside an annular slot located in correspondence with an annular surface that marks the limits of said first hole (27) of the decorative fleuron (26).

4. A single-lever mixer tap, according to claim 2 or 3, **characterized in that** part of a tubular body (30a) belonging to a selector controller (30) linked to the selector cartridge (12) is placed inside the second hole (29) of the decorative fleuron (26).

5. A single-lever mixer tap, according to claim 4, **characterized in that** it includes an adaptor (34) that is connected to a central axis (35) of the selector cartridge (12); where one end of the adaptor (34) is fitted inside the tubular body (30a) of the selector controller (30).

6. A single-lever mixer tap, according to claim 1, **characterized in that** the outlets (13, 14, 15) are placed at 90° degrees of relative angular difference between them.

7. A single-lever mixer tap, according to claim 1, **characterized in that** the selector cartridge (12) has an encasing lateral wall with arched windows (19) that allows the passage of liquid by means of flooding from the intermediate chamber (8) to the inside of said selector cartridge (12).

8. A single-lever mixer tap, according to claim 1, **characterized in that** the outlets (13, 14, 15) have closed bottoms (13a, 14a, 15a) comprising partition walls located in a central area behind the bottom (10) of the second head (1b) of the housing (1); where the selector cartridge (12) sits on said bottom (10).

9. A single-lever mixer tap, according to claim 1, **characterized in that** the housing (1) includes anchoring components, which are equidistant from a central point (41) of said housing (1).

10. A single-lever mixer tap, according to claim 9, **characterized in that** the anchoring components are located on lugs (39) connected to the housing (1).

11. A single-lever mixer tap, according to claim 9 or 10, **characterized in that** the anchoring components comprise through slots (40).

## Patentansprüche

1. Einhebel-Mischbatterie, umfassend:
- wenigstens ein Gehäuse (1) mit einem ersten Einlass (2) für heiße Flüssigkeit, einem zweiten Einlass (3) für kalte Flüssigkeit und mehreren Auslassen (13, 14, 15) für Flüssigkeit;
- eine Misch-Kartusche (6) zum Mischen der kalten und der heißen Flüssigkeit, wobei die Mischkartusche (6) auf einem Boden (4) mit einem Wasserdurchlass (2') aufsitzt, der heißes Wasser zu der Mischkartusche (6) strömen lässt, und einem Wasserdurchlass (3'), der kaltes Wasser zu der Mischkartusche (6) strömen lässt;
- eine Wähl-Kartusche (12) zum Auswählen eines der Auslasse (13, 14, 15);
- wobei das wenigstens eine Gehäuse (1) einen einteiligen Körper umfasst, der wenigstens einen ersten Kopf (1a) zum Mischen von Flüssigkeiten enthält, wobei der erste Kopf (1a) mit der Misch-Kartusche (6) gekoppelt ist, und der erste Kopf (1a) eine erste Kammer (2a), in die der erste Einlass (2) hinein führt, eine zweite Kammer (3a), in die der zweite Einlass (3) hinein führt, sowie eine dritte Kammer (7) umfasst, die mit einem gemeinsamen Auslass für die Flüssigkeit in der Misch-Kartusche (6) verbunden ist;
- die dritte Kammer (7) des ersten Kopfes (1a) mit einer Zwischenkammer (8) des Gehäuses (1) verbunden ist;
- das Gehäuse (1) des Weiteren einen zweiten Wähl-Kopf (1b) zum Leiten des Stroms von Wasser auf einen der Auslasse (13, 14, 15) zu umfasst, wobei der zweite Wähl-Kopf (1b) mit der Wähl-Kartusche (12) verbunden ist, und die Zwischenkammer (8) mit einem Raum verbunden ist, der die mit dem zweiten Kopf (1b) gekoppelte Wähl-Kartusche (12) umschließt;
- die Wähl-Kartusche (12) auf einem Boden (10) aufsitzt, der mehrere Löcher (13', 14', 15') enthält, die unabhängig mit den Auslassen (13, 14, 15) verbunden sind; wobei
- der erste Kopf (1a) des Gehäuses (1) einen ersten Kasten (5) umfasst, der den Boden (4) und einen ersten ringförmigen Teil (5a) umfasst, der eine Innenfläche aufweist, an der eine röhrenförmige Führungsschraube (16) befestigt ist, die als Führungskomponente der Misch-Kartusche (6) dient, die axial mittels einer ersten Befestigungsschraube (17) gehalten wird, die in die Führungsschraube (16) eingeschraubt ist;
- der zweite Kopf (1b) des Gehäuses (1) einen zweiten Kasten (11) umfasst, der den Boden (10) und einen zweiten ringförmigen Teil (11a) umfasst, der eine Innenfläche aufweist, an der eine zweite Befestigungsschraube (18) befestigt ist, die die Wähl-Kartusche (12) axial hält;
die Einhebel-Mischbatterie des Weiteren eine Verkleidung (21) umfasst, die durch einen Boden (21a) und eine umschließende Seitenwand (21b) gebildet wird, wobei der Boden (21) eine erste Öffnung (20a) sowie eine zweite Öffnung (20b) umfasst, an der eine Reihe äußerer umschließender Flächen des ersten und des zweiten ringförmigen Teils (5a, 11 a) des ersten und des zweiten Kastens (5, 11) befestigt sind.

2. Einhebel-Mischbatterie nach Anspruch 1, **dadurch gekennzeichnet, dass**:
- sie eine Zier-Abdeckung (26) enthält, die ein erstes Loch (27), das koaxial zu der Misch-Kartusche (6) ist, und ein zweites Loch (29) aufweist, das koaxial zu der Wähl-Kartusche (12) ist;
- ein vorderes Versteifungsblech (33) an einer Innenfläche der Zier-Abdeckung (26) befestigt ist, wobei das vordere Versteifungsblech eine Aussparung (33a) aufweist, in die ein vorstehender Teil einer axialen Führung (22) eingepasst ist, die mit einer Innenseite der Seitenwand (21 b) des Gehäuses (21) verbunden ist, und ein Teil der Führungsschraube (16) im Inneren des ersten Lochs (27) der Zier-Abdeckung (26) positioniert ist.

3. Einhebel-Mischbatterie nach Anspruch 2, **dadurch gekennzeichnet, dass** der im Inneren des ersten Lochs (27) positionierte Teil der Führungsschraube (16) im Inneren einer Verbindung (31) angezogen ist, die ihrerseits im Inneren eines ringförmigen Schlitzes aufgenommen ist, der sich an einer ringförmigen Fläche befindet, die die Grenzen des ersten Lochs (27) der Zier-Abdeckung (26) markiert.

4. Einhebel-Mischbatterie nach Anspruch 2 oder 3, **dadurch gekennzeichnet, dass** ein Teil eines röhrenförmigen Körpers (30a), der zu einer Wähl-Steuerungseinrichtung (30) gehört, die mit der Wähl-Kartusche (12) verbunden ist, im Inneren des zweiten Lochs (29) der Zier-Abdeckung (26) positioniert ist.

5. Einhebel-Mischbatterie nach Anspruch 4, **dadurch gekennzeichnet, dass** sie einen Adapter (34) enthält, der mit einer Mittelachse (35) der Wähl-Kartusche (12) verbunden ist, wobei ein Ende des Adapters (34) in das Innere des Rohrkörpers (30a) der Wähl-Steuerungseinrichtung (30) eingesetzt ist.

6. Einhebel-Mischbatterie nach Anspruch 1, **dadurch gekennzeichnet, dass** die Auslasse (13, 14, 15) in relativer Winkeldifferenz von 90° zwischen ihnen angeordnet sind.

7. Einhebel-Mischbatterie nach Anspruch 1, **dadurch gekennzeichnet, dass** die Wähl-Kartusche (12) eine umschließende Seitenwand mit bogenförmigen Ausschnitten (19) aufweist, die den Durchtritt von Flüssigkeit durch Fluten aus der Zwischenkammer (8) in das Innere der Wähl-Kartusche (12) ermöglicht.

8. Einhebel-Mischbatterie nach Anspruch 1, **dadurch gekennzeichnet, dass** die Auslasse (13, 14, 15) geschlossene Böden (13a, 14a, 15a) aufweisen, die Trennwände umfassen, die sich in einem mittigen Bereich hinter dem Boden (10) des zweiten Kopfes (1b) des Gehäuses (1) befinden, wobei die Wähl-Kartusche (12) auf dem Boden (10) aufsitzt.

9. Einhebel-Mischbatterie nach Anspruch 1, **dadurch gekennzeichnet, dass** das Gehäuse (1) Verankerungs-Komponenten enthält, die von einem mittigen Punkt (41) des Gehäuses (1) gleich weit beabstandet sind.

10. Einhebel-Mischbatterie nach Anspruch 9, **dadurch gekennzeichnet, dass** sich die Verankerungs-Komponenten an mit dem Gehäuse (1) verbundenen Laschen (39) befinden.

11. Einhebel-Mischbatterie nach Anspruch 9 oder 10, **dadurch gekennzeichnet, dass** die Verankerungs-Komponenten Durchgangsschlitze (40) umfassen.

## Revendications

1. Robinet mélangeur à un seul levier, qui comprend :
- au moins un logement (1) avec un premier orifice d'entrée (2) de liquide chaud, un second orifice d'entrée (3) de liquide froid, et plusieurs orifices de sortie (13, 14, 15) de liquide ;
- une cartouche de mélange (6) afin de mélanger les liquides chaud et froid ; dans lequel ladite cartouche de mélange (6) est assise sur un fond (4) avec un passage d'eau (2') qui laisse passer l'eau chaude vers la cartouche de mélange (6) et un passage d'eau (3') qui laisse l'eau froide passer vers la cartouche de mélange (6) ;
- une cartouche de sélecteur (12) pour sélectionner l'un des orifices de sortie (13, 14, 15) ;
- l'au moins un logement (1) comprend un corps d'une pièce incluant au moins une première tête (1a) pour mélanger des liquides, dans lequel ladite première tête (1a) est couplée à la cartouche de mélange (6) ; et dans lequel ladite première tête (1a) comprend une première chambre (2a) à laquelle mène le premier orifice d'entrée (2), une seconde chambre (3a) à laquelle mène le second orifice d'entrée (3), et une troisième chambre (7) connectée à un orifice de sortie commun pour le liquide dans la cartouche de mélange (6) ;
- la troisième chambre (7) de la première tête (1a) est connectée à une chambre intermédiaire (8) du logement (1) ;
- le logement (1) comprend aussi une seconde tête (1b) de sélecteur pour envoyer le flux d'eau vers l'un des orifices de sortie (13, 14, 15) ; dans lequel ladite seconde tête (1b) de sélecteur est connectée à la cartouche de sélecteur (12) ; et dans lequel la chambre intermédiaire (8) est connectée à un espace enclosant la cartouche de sélecteur (12) couplée à la seconde tête (1b) ;
- la cartouche de sélecteur (12) est assise sur un fond (10) qui inclut plusieurs trous (13', 14', 15') qui sont connectés indépendamment avec les orifices de sortie (13, 14, 15) ; dans lequel
- la première tête (1a) du logement (1) comprend un premier boîtier (5) qui comprend le fond (4) et une première partie annulaire (5a) qui a une surface intérieure sur laquelle une vis de guidage (16) de forme tubulaire est fixée, qui agit comme un composant de guidage de la cartouche de mélange (6) maintenu axialement au moyen d'une première vis de fixation (17) qui se visse dans la vis de guidage (16) ;
- la seconde tête (1b) du logement (1) comprend un second boîtier (11) qui comprend le fond (10) et une seconde partie annulaire (11a) qui a une surface intérieure où une seconde vis de fixation (18) est fixée, qui maintient axialement la cartouche de sélecteur (12) ;
le robinet mélangeur à un seul levier comprend en outre un carter (21) formé par un fond (21a) et une paroi latérale de carter (21b) ; dans lequel ledit fond (21) comprend une première ouverture (20a) et une seconde ouverture (20b) sur lesquelles une série de surfaces de fermeture extérieures des première et seconde parties annulaires (5a, 11a) des premier et second boîtiers (5, 11) sont fixées.

2. Robinet mélangeur à un seul levier selon la revendication 1, **caractérisé en ce que** :
- il inclut un fleuron décoratif (26) qui comporte un premier trou (27) qui est coaxial avec la cartouche de mélange (6), et un second trou (29) qui est coaxial avec la cartouche de sélecteur (12) ;
- une plaque gousset avant (33) est fixée sur une face intérieure du fleuron décoratif (26) ; ladite plaque gousset avant comportant un évidement (33a) dans lequel une partie saillante d'un guide axial (22) connectée à un côté intérieur de la paroi latérale (21b) du carter (21) est ajustée ; dans lequel une partie de la vis de guidage (16) est placée à l'intérieur du premier trou (27) du fleuron décoratif (26).

3. Robinet mélangeur à un seul levier selon la revendication 2, **caractérisé en ce que** la partie de la vis de guidage (16) placée à l'intérieur du premier trou (27) est serrée à l'intérieur d'un joint (31) qui est logé à son tour à l'intérieur d'une fente annulaire située en correspondance avec une surface annulaire qui marque les limites dudit premier trou (27) du fleuron décoratif (26).

4. Robinet mélangeur à un seul levier selon la revendication 2 ou 3, **caractérisé en ce qu'**une partie d'un corps tubulaire (30a) appartenant à une commande de sélecteur (30) liée à la cartouche de sélecteur (12) est placée à l'intérieur du second trou (29) du fleuron décoratif (26).

5. Robinet mélangeur à un seul levier selon la revendication 4, **caractérisé en ce qu'**il inclut un adaptateur (34) qui est connecté à un axe central (35) de la cartouche de sélecteur (12) ; dans lequel une extrémité de l'adaptateur (34) et ajustée à l'intérieur du corps tubulaire (30a) de la commande de sélecteur (30).

6. Robinet mélangeur à un seul levier selon la revendication 1, **caractérisé en ce que** les orifices de sortie (13, 14, 15) sont placés à 90° de différence angulaire relative entre eux.

7. Robinet mélangeur à un seul levier selon la revendication 1, **caractérisé en ce que** la cartouche de sélecteur (12) comporte une paroi latérale de carter avec des fenêtres arquées (19) qui permettent le passage de liquide au moyen d'un écoulement depuis la chambre intermédiaire (8) vers l'intérieur de ladite cartouche de sélecteur (12).

8. Robinet mélangeur à un seul levier selon la revendication 1, **caractérisé en ce que** les orifices de sortie (13, 14, 15) ont des fonds fermés (13a, 14a, 15a) comprenant des parois de séparation situées dans une aire centrale derrière le fond (10) de la seconde tête (1b) du logement (1) ; dans lequel la cartouche de sélecteur (12) est assise sur ledit fond (10).

9. Robinet mélangeur à un seul levier selon la revendication 1, **caractérisé en ce que** le logement (1) inclut des composants d'ancrage, qui sont équidistants d'un point central (41) dudit logement (1).

10. Robinet mélangeur à un seul levier selon la revendication 9, **caractérisé en ce que** les composants d'ancrage sont situés sur des pattes (39) connectées au logement (1).

11. Robinet mélangeur à un seul levier selon la revendication 9 ou 10, **caractérisé en ce que** les composants d'ancrage comprennent des fentes traversantes (40).
